# FASCICULE DE BREVET EUROPEEN

(11) **EP 2 707 189 B1**
(45) Date de publication et mention de la délivrance du brevet: **13.07.2016**
(21) Numéro de dépôt: 12728653.2
(22) Date de dépôt: 11.05.2012
(51) Int. Cl.: B29B 7/56, B29B 7/74, B29B 7/88

(54) **PROCÉDÉ ET INSTALLATION DE RÉALISATION D'UNE GOMME POUR PNEUMATIQUE COMPRENANT UNE ÉTAPE DE MALAXAGE**
VERFAHREN UND EINRICHTUNG ZUR HERSTELLUNG EINES KAUTSCHUKS FÜR EINEN REIFEN MIT EINEM KNETSCHRITT
PROCESS AND EQUIPMENT FOR PRODUCING A RUBBER FOR A TYRE COMPRISING A KNEADING STEP

(30) Priorité: 13.05.2011 FR 1154190
(43) Date de publication de la demande: 19.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MAGNE, André, F-63040 Clermont-Ferrand Cedex 9 (FR); VACHERON, Christian, F-63040 Clermont-Ferrand Cedex 9 (FR)
(74) Mandataire: Noel, Luminita
(86) Numéro de dépôt international: PCT/FR2012/051042
(87) Numéro de publication internationale: WO 2012/156623

(56) Documents cités:
- EP-A1- 0 979 714
- CN-U- 201 544 364
- DE-T5-112005 002 546
- JP-A- 62 278 005
- JP-A- 2004 181 805
- JP-U- H0 464 110
- US-A- 4 840 491

## Description

L'invention concerne la réalisation d'une gomme pour la fabrication d'un pneumatique.

Il est connu que la réalisation d'une gomme pour pneumatique de roue de véhicule met en oeuvre des étapes successives de mélangeage. Ainsi, on mélange tout d'abord des matériaux élastomères avec une charge de noir de carbone ou de silice. Ce mélangeage a lieu dans la cuve d'un mélangeur et entraîne une hausse de la température du mélange qui peut atteindre par exemple 170°C. On transfère ensuite ce mélange jusqu'à un poste où il continue à être travaillé tout en étant réfrigéré. Ce travail a lieu en faisant circuler le mélange entre deux cylindres pour lui donner la forme d'une nappe. Les moyens de réfrigération du poste abaissent la température jusqu'à 80°C environ.

Il est connu d'ajouter à la gomme un produit favorisant sa vulcanisation lors de sa cuisson ultérieure. Pour ne pas engendrer une vulcanisation partielle précoce de la gomme, le produit vulcanisant n'est pas incorporé en même temps que les autres ingrédients. Ainsi, c'est une fois les étapes précitées exécutées que le mélange est transféré vers un poste de finition où le produit vulcanisant est ajouté au mélange et mêlé à ce dernier.

Un agencement de ce type est décrit par exemple dans le document DE-11 2005 002546 T5.

Or, les propriétés de la gomme lors de la vulcanisation sont très sensibles aux proportions des ingrédients formant le mélange. Ainsi, si la quantité de produit vulcanisant n'est pas ajoutée au mélange dans les proportions correctes, la vulcanisation peut être ou bien trop rapide, ou bien insuffisante, ce qui dans les deux cas compromet les qualités de la gomme et celles du pneumatique final.

Par ailleurs, le document JP2004181805 A décrit une installation faisant circuler une nappe en boucle fermée dans une calandre.

Le document EP0979714 A1 divulgue une méthode et une installation permettant le mélange et l'homogénéisation des composants d'une gomme de pneumatique circulant en boucle fermée dans une calandre.

Un but de l'invention est de favoriser le respect des proportions des ingrédients du mélange formant la gomme.

A cet effet, on prévoit selon l'invention un procédé de réalisation d'une gomme pour la fabrication d'un pneumatique, dans lequel :
- une calandre forme une nappe avec un mélange d'ingrédients de la gomme pendant qu'un convoyeur déplace la nappe dans un premier sens, gomme pendant qu'un convoyeur déplace la nappe dans un premier sens,
- on dépose sur la nappe une masse de produit autre que de la gomme, et
- le convoyeur déplace la nappe dans un deuxième sens de sorte que la masse se trouve entre deux faces de la nappe s'étendant l'une contre l'autre.

Ainsi, le changement de sens du convoyeur permet d'interposer le produit entre deux portions de la nappe. On évite donc que la gomme et le produit soient séparés l'un de l'autre durant la suite de la réalisation de la gomme. On assure de ce fait un meilleur respect des proportions finales des ingrédients de la gomme.

Avantageusement, on fait circuler la nappe sous la forme d'un boucle fermée.

Ainsi, ce malaxage permet de travailler la gomme de façon efficace et rapide.

On peut prévoir qu'un dispositif comprenant la calandre et le convoyeur ouvre la boucle pour former deux extrémités libres de la nappe.

Cette ouverture permet d'évacuer facilement la nappe.

De préférence, le produit formant la masse comprend un composé favorisant la vulcanisation de la gomme.

Le procédé de l'invention n'est pas restreint à ce cas car il permet aussi d'ajouter au mélange d'autre produits complémentaires qu'un produit vulcanisant, mais il est bien adapté à un tel produit pour lesquelles le respect des proportions revêt une grande importance.

De préférence, on effectue le dépôt du produit seulement après qu'une température de la nappe est devenue inférieure à un seuil prédéterminé.

On attend donc que la gomme ait atteint une température compatible avec l'adjonction du produit.

Avantageusement, on évacue d'un dispositif comprenant la calandre et le convoyeur la nappe avec la masse se trouvant entre les deux faces s'étendant l'une contre l'autre.

Ainsi, on ajoute le produit complémentaire à la gomme non lors de son arrivée au dernier poste de mélangeage mais avant qu'elle ne quitte le poste dans lequel a lieu le mélangeage des ingrédients excepté celui du produit. Et ce produit ne quitte pas le mélange jusqu'à l'arrivée au poste de finition. On favorise donc encore l'obtention d'une gomme présentant les propriétés attendues.

On prévoit de préférence que le convoyeur effectue l'évacuation dans le deuxième sens.

On prévoit également selon l'invention une installation conforme à la revendication 8.

Ainsi, on facilite la réalisation d'un repli de nappe dans lequel est disposée la masse de produit.

Ces deux convoyeurs assurent des déplacements dans des directions respectives non coplanaires. De préférence, le deuxième convoyeur présente une extrémité située au-dessus du premier et en regard de ce dernier. De plus, le deuxième convoyeur ne s'étend pas à la verticale de la calandre et ne se trouve donc ni au-dessus, ni au-dessous de celle-ci.

Avantageusement, l'installation comprend des moyens de réfrigération internes à la calandre. De tels moyens permettent d'accélérer la baisse de température de la gomme par comparaison avec la situation dans laquelle le refroidissement de la calandre n'aurait lieu qu'au contact de l'air ambiant.

De préférence, le deuxième convoyeur s'étend en amont de la calandre par référence à un sens d'évacuation hors de l'installation par le premier convoyeur.

L'installation comprend un troisième convoyeur incliné par rapport à la direction verticale et présentant une extrémité située au-dessus de la calandre.

Ce convoyeur permet de faire circuler la nappe en boucle fermée.

Également, on peut prévoir que l'installation comprend des moyens de réfrigération internes au troisième convoyeur.

Ici encore, de tels moyens permettent d'accélérer la baisse de température de la gomme.

Avantageusement, le deuxième convoyeur présente une extrémité située au-dessous du troisième convoyeur.

D'autres caractéristiques et avantages de l'invention apparaîtront encore dans la description suivante d'un mode de réalisation donné à titre d'exemple non limitatif en référence aux dessins annexés sur lesquels :
- les figures 1 et 2 sont des vues respectives en plan et en élévation d'un poste de malaxage d'une installation de réalisation d'une gomme selon l'invention ; et
- les figures 3, 4 et 5 illustrent des étapes successives du présent mode de mise en oeuvre du procédé de l'invention au moyen de l'installation des figures 1 et 2.

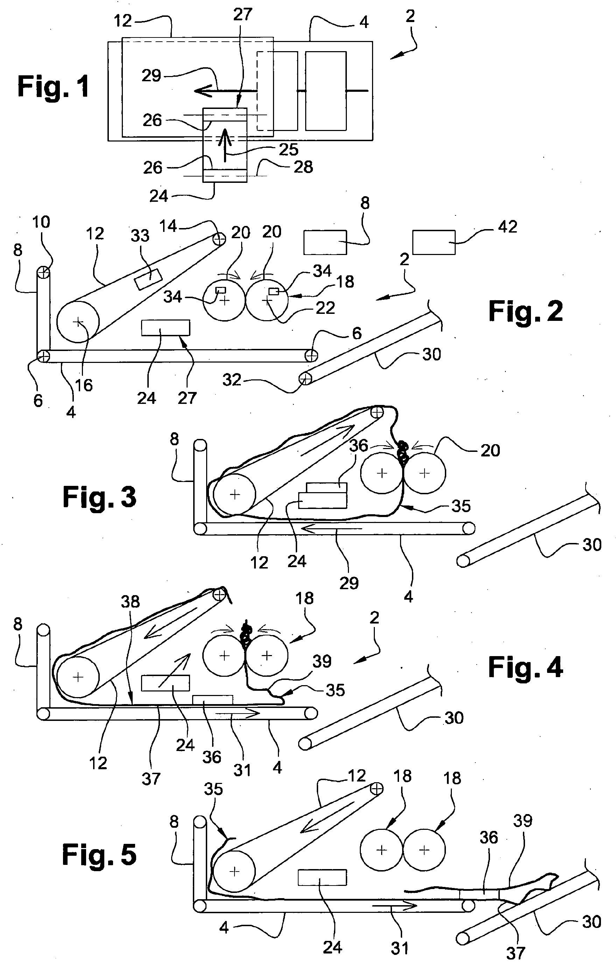

On a illustré aux figures 1 et 2 un poste 2 d'une installation pour la réalisation d'une gomme pour pneumatique selon l'invention. Il peut s'agit de pneumatique de roue de véhicule léger, de véhicule de tourisme, de véhicule utilitaire, de véhicule de type poids lourd ou encore de roue d'engin de génie civil.

Le poste 2 comprend un tapis inférieur horizontal 4 sous la forme d'une bande sans fin apte à circuler en étant maintenue et entraînée entre deux rouleaux 6 dont les axes définissant les axes de rotation sont horizontaux et montés rotatifs par rapport à un bâti 8 du poste. Les deux parois du tapis sont horizontales.

De façon similaire, le poste comprend un tapis vertical 8 agencé sous la forme d'une bande sans fin apte à circuler en étant maintenue et entraînée entre l'un des rouleaux 6 et un rouleau 10 s'étendant au-dessus de ce dernier. Les deux parois du tapis 8 sont verticales.

Le poste 2 comprend aussi un tapis élévateur 12 sous la forme d'une boucle sans fin apte à circuler en étant supportée et entraînée par un rouleau supérieur 14 et un rouleau inférieur 16 de plus grand diamètre que le rouleau 14. Le rouleau 14 s'étend à distance du rouleau 16 suivant la direction horizontale et suivant la direction verticale. Le tapis 12 comprend des moyens de réfrigération internes 33 situés entre les deux couches de la bande ou dans l'un au moins des rouleaux 6, 10.

Le poste 2 comprend en outre une calandre 18 comportant deux cylindres 20 identiques entre eux et disposés en regard l'un de l'autre avec leurs axes géométriques de rotation 22 parallèles l'un à l'autre. Les deux rouleaux s'étendent à distance l'un de l'autre et au-dessus du tapis horizontal. La calandre comprend des moyens 34 de réfrigération internes aux rouleaux.

Tous les axes des rouleaux précités 6, 10, 14, 16 ainsi que les axes 22 des cylindres sont horizontaux et parallèles entre eux.

Le poste 2 comprend également un tapis d'introduction horizontal 24 ayant une bande en forme de boucle fermée apte à circuler en étant maintenue et entraînée par deux rouleaux 26 présentant des axes 28 horizontaux, parallèles l'un à l'autre et perpendiculaires aux axes précités. La paroi supérieure horizontale du tapis 24 se déplace dans une direction 25 perpendiculaire à la direction 29 de déplacement de la paroi du tapis inférieur 4. De plus, le tapis 24 est apte à circuler de sorte que des produits disposés sur sa face supérieure en sont déchargés par l'extrémité 27 située en partie supérieure de la figure 1. Cette extrémité s'étend au-dessus du tapis inférieur 4, en regard de ce dernier, environ à mi-distance de ses extrémités formées par les rouleaux 6.

Enfin, le poste comprend un tapis de transfert 30 ayant une bande agencée sous la forme d'une boucle fermée apte à circuler en étant maintenue et entraînée par des rouleaux 32 dont un seul est visible sur la figure 2. Ce rouleau présente un axe parallèle à celui du rouleau 6 et s'étend au-dessous de ce dernier.

Le rouleau 14 s'étend au-dessus de l'un des cylindres 20 sans recouvrir l'autre cylindre 20. Le tapis élévateur 12 s'étend au-dessus d'une partie du tapis d'introduction 24 et notamment de son extrémité de déchargement. Le rouleau 16 s'étend en regard des deux tapis 4 et 8 et du cylindre 6 qui les supporte tous deux. Le tapis d'introduction 24 se trouve à côté de la calandre 18 sans être à la verticale de cette dernière.

On commande l'installation de façon à mettre en oeuvre le procédé de l'invention de la façon suivante.

Dans un poste de l'installation non illustré et situé en amont du poste 2, on mélange dans une cuve un élastomère naturel, un élastomère synthétique et une charge formée par exemple par du noir de carbone ou de la silice. A ce stade, on n'incorpore pas de produit vulcanisant au mélange.

A l'issue de cette phase de mélange, on évacue le mélange par une ouverture inférieure de la cuve et on transfère cette masse de gomme 35 vers le poste 2 de l'installation.

La masse de gomme 35 passe dans la calandre 18 entre les cylindres 20 tournant en sens contraires et forme une nappe. Le tapis inférieur 4 est en mouvement de sorte que sa paroi supérieure se déplace vers la gauche comme indiqué sur la figure 3. Le tapis vertical 8 est en mouvement de sorte que sa paroi droite se déplace vers le haut. On fait tourner les rouleaux 14 et 16 dans le sens horaire de sorte que la paroi supérieure du tapis 12 s'élève au cours du mouvement de ce tapis.

Au cours de son passage dans la calandre, la gomme forme une nappe qui se dépose sur la paroi supérieure du tapis inférieur 4 et est transférée en direction du tapis vertical.

Un opérateur place une partie d'extrémité de cette nappe autour du rouleau inférieur 16 de sorte que cette partie est entraînée sur le tapis élévateur en passant entre ce dernier et le tapis vertical 8. Elle parcourt le tapis élévateur 12, franchit le rouleau 14 et retombe en direction de la calandre où elle s'accumule à nouveau.

On forme ainsi une nappe en boucle fermée qui circule en continu dans le sens horaire comme indiqué à la figure 3, de la calandre au tapis inférieur puis sur le tapis élévateur et à nouveau dans la calandre, et cela plusieurs fois. Au cours de ce mouvement, la gomme s'accumule dans la calandre en amont des rouleaux pour reformer une nappe à la sortie de ceux-ci. Cette circulation engendre donc une poursuite du mélangeage et du malaxage des ingrédients. Au cours de ce mouvement, les moyens de réfrigération 34 abaissent la température de la gomme qui subit par ailleurs un abaissement de sa température du fait de son contact avec l'air et les autres organes du poste 2. Alors que sa température atteignait 170 °C avant son arrivée sur le poste, à l'issue de cette circulation, elle atteint environ 80°C. Ces valeurs sont données seulement à titre d'exemple. La circulation de la nappe a lieu par exemple entre une et quatre minutes, de préférence durant deux minutes.

Pour mettre fin à cette circulation, on commande une inversion du sens de déplacement du tapis élévateur 12 comme illustré à la figure 4 tout en poursuivant la rotation des cylindres 20 comme précédemment. Cela entraîne une rupture de la nappe entre le rouleau 14 et la calandre et donc l'ouverture de la boucle. Au même moment, on commande l'inversion du sens de déplacement du tapis inférieur de façon à amorcer le déplacement de la nappe en direction du tapis de transfert 30 dans le sens 31, vers la droite sur la figure.

Au même moment également, on introduit dans le poste un bloc de produit vulcanisant 36. Il s'agit par exemple d'un mélange de souffre et d'un produit retardateur. Ce bloc a en l'espèce une forme de parallélépipède rectangle. Il forme une masse de produit proportionnée aux constituants du mélange formant la gomme. Le bloc 36 est introduit par le tapis 24 qui l'achemine par sa paroi supérieure jusqu'à l'extrémité de déchargement 27 et le fait chuter directement sur une portion 37 de la nappe supportée par le tapis inférieur 4 et donc se trouvant dans la moitié inférieure de.cette dernière. Le bloc est donc disposé sur une face supérieure 38 d'une portion 37 de la nappe dont le malaxage au poste 2 se trouve maintenant achevé puisque cette portion ne repassera plus dans la calandre. Au moment du dépôt du bloc sur la nappe, une partie de cette dernière est encore supportée sur toute la face supérieure du tapis élévateur 12 et une autre par la calandre 20 dans laquelle elle achève de passer.

Au cours de la poursuite des mouvements des différents organes du poste 2, la portion 37 de nappe supportant le bloc se déplace avec ce dernier vers la droite tandis que la portion d'extrémité 39 de la nappe traversant la calandre se dépose progressivement sur cette portion pour la recouvrir ainsi que le bloc. Ce dernier se trouve donc interposé entre les faces internes des deux portions 37, 39 de la nappe s'étendant l'une contre l'autre et l'une au-dessus de l'autre. On forme ainsi un pli ou agencement à deux couches, dans lequel est logé le bloc. On fait ici observer que l'extrémité du tapis 24 se trouve en amont de la calandre par référence au déplacement du tapis 4 vers la droite.

La poursuite du mouvement du tapis élévateur évacue l'autre partie d'extrémité de la nappe vers le tapis horizontal. Progressivement, celle-ci est transférée sur le tapis de transfert 30.

Toujours dans la même configuration avec le bloc entre les deux portions de nappe, l'ensemble est ensuite envoyé vers un poste finisseur où la nappe et le bloc vulcanisant sont mélangés.

Ainsi, on transporte la gomme 35 et le bloc vulcanisant 36 du poste 2 vers le poste suivant de l'installation dans une configuration telle que le bloc est enveloppé dans la nappe. On évite de ce fait les pertes de matière de produit vulcanisant lors du transfert de cet ensemble.

Il importe de souligner que le bloc 36 n'est pas mélangé à la gomme de la nappe 35 ni ne fait l'objet d'un malaxage avec celle-ci au sein du poste 2. C'est seulement dans un poste ultérieur de l'installation que ces opérations ont lieu. On souligne également que le bloc est disposé contre une face d'une partie de la nappe dont le malaxage dans le poste 2 est achevé.

On peut prévoir que l'installation comprend des moyens de commande 42 aptes à commander tout ou partie des étapes du procédé qui vient d'être décrit. Ces moyens comprennent avantageusement un ou plusieurs ordinateurs à microprocesseurs et mémoires ainsi qu'un programme comprenant des instructions de code aptes à commander l'exécution de ces étapes lorsque ces instructions sont exécutées sur un ordinateur.

## Revendications

1. Procédé de réalisation d'une gomme pour la fabrication d'un pneumatique, dans lequel :
- une calandre (18) forme une nappe (35) avec un mélange d'ingrédients de la gomme pendant qu'un convoyeur (4) déplace la nappe dans un premier sens (29),
- on dépose sur la nappe une masse (36) de produit autre que de la gomme, et
- le convoyeur déplace la nappe dans un deuxième sens (31) de sorte que la masse se trouve entre deux faces de la nappe s'étendant l'une contre l'autre.

2. Procédé selon la revendication précédente dans lequel on fait circuler la nappe (35) sous la forme d'une boucle fermée.

3. Procédé selon la revendication précédente dans lequel un dispositif comprenant la calandre et le convoyeur ouvre la boucle pour former deux extrémités libres de la nappe (35).

4. Procédé selon au moins l'une quelconque des revendications précédentes dans lequel le produit (36) formant la masse comprend un composé favorisant la vulcanisation de la gomme.

5. Procédé selon au moins l'une quelconque des revendications précédentes dans lequel on effectue le dépôt du produit (36) seulement après qu'une température de la nappe est devenue inférieure à un seuil prédéterminé.

6. Procédé selon au moins l'une quelconque des revendications précédentes dans lequel on évacue d'un dispositif comprenant la calandre et le convoyeur la nappe (35) avec la masse (36) se trouvant entre les deux faces s'étendant l'une contre l'autre.

7. Procédé selon la revendication précédente dans lequel le convoyeur effectue l'évacuation dans le deuxième sens (31).

8. Installation (2) de réalisation d'une gomme, apte à mettre en oeuvre un procédé selon au moins l'une quelconque des revendications précédentes, et qui comprend une calandre (18), un premier convoyeur (4) et un deuxième convoyeur (24) apte à faire chuter la masse directement sur une portion de la nappe supportée par le premier convoyeur, l'installation étant apte à faire circuler la nappe en boucle fermée et étant **caractérisée en ce qu'**elle comprend un troisième convoyeur (12) incliné par rapport à la direction verticale et présentant une extrémité située au-dessus de la calandre, de telle sorte que la nappe tombe en direction de la calandre.

9. Installation selon la revendication précédente, qui comprend des moyens de réfrigération (34) internes à la calandre.

10. Installation selon au moins l'une quelconque des revendications 8 à 9 dans laquelle le deuxième convoyeur (24) s'étend en amont de la calandre par référence à un sens (31) d'évacuation hors de l'installation par le premier convoyeur.

11. Installation selon au moins l'une quelconque des revendications 8 à 10, qui comprend des moyens de réfrigération (33) internes au troisième convoyeur.

12. Installation selon au moins l'une quelconque des revendications 8 à 11, dans laquelle le deuxième convoyeur (24) présente une extrémité (27) située au-dessous du troisième convoyeur (12).

## Patentansprüche

1. Verfahren zur Herstellung eines Gummis für die Fertigung eines Reifens, bei welchem:
ein Kalander (18) ein Band (35) mit einer Mischung aus Bestandteilen des Gummis bildet, während ein Transportband (4) das Band in einer ersten Richtung (29) transportiert;
auf dem Band eine Masse (36) eines anderen Produktes als Gummi abgelegt wird, und
das Transportband das Band in einer zweiten Richtung (31) derartig transportiert, dass sich die Masse zwischen zwei sich aufeinander erstreckenden Flächen des Bandes befindet.

2. Verfahren nach dem vorhergehenden Anspruch, bei welchem man das Band (35) in der Form einer geschlossenen Schleife zirkulieren lässt.

3. Verfahren nach dem vorhergehenden Anspruch, bei welchem eine Vorrichtung, welche den Kalander und das Transportband aufweist, die Schleife öffnet, um zwei freie Enden des Bandes (35) zu bilden.

4. Verfahren nach mindestens einem der vorhergehenden Ansprüche, bei welchem das die Masse bildende Produkt (36) eine Verbindung aufweist, welche die Vulkanisierung des Gummis begünstigt.

5. Verfahren nach mindestens einem der vorhergehenden Ansprüche, bei welchem die Ablage des Produktes (36) erst vorgenommen wird, nachdem eine Temperatur des Bandes niedriger als ein vorgegebener Schwellenwert geworden ist.

6. Verfahren nach mindestens einem der vorhergehenden Ansprüche, bei welchem aus einer Vorrichtung, welche den Kalander und das Transportband aufweist, das Band (35) mit der sich zwischen den beiden sich aufeinander erstreckenden Flächen befindlichen Masse (36) entnommen wird.

7. Verfahren nach dem vorhergehenden Anspruch, bei welchem das Transportband die Entnahme in der zweiten Richtung (31) durchführt.

8. Anlage (2) zur Herstellung eines Gummis, welche geeignet ist, ein Verfahren nach mindestens einem der vorhergehenden Ansprüche durchzuführen, und welche einen Kalander (18), ein erstes Transportband (4) und ein zweites Transportband (24) aufweist, welches geeignet ist, die Masse direkt auf einen Abschnitt des von dem ersten Transportband gehaltenen Bandes fallen zu lassen, wobei die Anlage geeignet ist, das Band in geschlossener Schleife zirkulieren zu lassen, und **dadurch gekennzeichnet ist, dass** sie ein drittes Transportband (12) aufweist, welches in Bezug auf die senkrechte Richtung geneigt ist und ein Ende aufweist, welches sich oberhalb des Kalanders befindet, so dass das Band in Richtung des Kalanders fällt.

9. Einrichtung nach dem vorhergehenden Anspruch, welche innerhalb des Kalanders befindliche Mittel zur Kühlung (34) aufweist.

10. Einrichtung nach mindestens einem der Ansprüche 8 bis 9, bei welcher sich das zweite Transportband (24) stromaufwärts des Kalanders in Bezug auf eine Richtung (31) zur Entnahme aus der Einrichtung heraus durch das erste Transportband erstreckt.

11. Einrichtung nach mindestens einem der Ansprüche 8 bis 10, welche innerhalb des dritten Transportbandes befindliche Mittel zur Kühlung (33) aufweist.

12. Einrichtung nach mindestens einem der Ansprüche 8 bis 11, bei welcher das zweite Transportband (24) ein Ende (27) aufweist, welches oberhalb des dritten Transportbandes (12) angeordnet ist.

## Claims

1. Process for producing a rubber for manufacturing a tyre, in which:
- a calender (18) forms a ply (35) with a mixture of ingredients of the rubber whilst a conveyor (4) moves the ply in a first direction (29),
- a mass (36) of product other than the rubber is deposited on the ply, and
- the conveyor moves the ply in a second direction (31), such that the mass is arranged between two faces of the ply extending one against the other.

2. Process according to the preceding claim, wherein the ply (35) is circulated in the form of a closed loop.

3. Process according to the preceding claim, wherein a device comprising the calender and the conveyor opens the loop so as to form two free ends of the ply (35).

4. Process according to at least any one of the preceding claims, wherein the product (36) forming the mass comprises a compound promoting the vulcanization of the rubber.

5. Process according to at least any one of the preceding claims, wherein the product (36) is deposited only once a temperature of the ply has become lower than a predetermined threshold.

6. Process according to at least any one of the preceding claims, wherein the ply (35) is discharged from a device comprising the calender and the conveyor, together with the mass (36) arranged between the two faces extending one against the other.

7. Process according to the preceding claim, wherein the conveyor carries out the discharge in the second direction (31).

8. Equipment (2) for producing a rubber, able to carry out a process according to at least any one of the preceding claims, and which comprises a calender (18), a first conveyor (4), and a second conveyor (24) able to dispense the mass directly onto a portion of the ply carried by the first conveyor, the equipment being able to make the ply circulate in a closed loop and being **characterised in that** it comprises comprises a third conveyor (12), which is inclined with respect to the vertical direction and has an end arranged above the calender, such as the ply falls in direction of the calander.

9. Equipment according to the preceding claim, which comprises cooling means (34) within the calender.

10. Equipment according to at least any one of Claims 8 to 9, wherein the second conveyor (24) extends upstream of the calender with respect to a discharge direction (31) outside the equipment by the first conveyor.

11. Equipment according to at least any one of Claims 8 to 10, which comprises cooling means (33) within the third conveyor.

12. Equipment according to at least any one of Claims 8 to 11, wherein the second conveyor (24) has an end (27) arranged below the third conveyor (12).
